# EUROPEAN PATENT APPLICATION

(11) **EP 1 361 499 A2**
(43) Date of publication of application: **12.11.2003**
(21) Application number: 03252833.3
(22) Date of filing: 06.05.2003
(51) Int. Cl.: G06F 1/26

(54) **Method and/or system and/or apparatus for multiple interface remotely configurable power supply**

(30) Priority: 06.05.2002 US 378342 P
(71) Applicant: Cyber Switching, Inc., Santa Clara, CA 95050 (US)
(72) Inventor: Reynolds, Charles H., Gilroy, CA 94020 (US)
(74) Representative: Hackney, Nigel John

(57) **Abstract**

Methods and/or systems providing new capabilities in power supply and/or power cycling management allowing a variety of different remote interfacing.

## Description

This application claims priority from provisional patent application 60/378,342, filed 6 May 2002 and incorporated herein by reference.

This invention relates to electronic circuits. More particularly, the invention relates to a method and apparatus for an intelligent power supply that provides novel features.

Early in the development of modern networking equipment such as routers, it was realized that at times a particular piece of network equipment might hang or "crash." In such instances, a human operator often had to intervene by traveling to the location of the equipment and rebooting or power cycling the equipment in order to get that particular piece of equipment working. Power cycling and information about consumed power are also of interest in a number of computer equipment and other equipment settings.

The discussion of any work, publications, sales, or activity anywhere in this submission, including in any documents submitted with this application, shall not be taken as an admission that any such work constitutes prior art. The discussion of any activity, work, or publication herein is not an admission that such activity, work, or publication existed or was known in any particular jurisdiction.

The present invention relates to a method and/or system and/or apparatus for providing new capabilities in power supply and/or power cycling management. In specific embodiments, the invention involves a method and/or system and/or apparatus for remotely managing and monitoring a power supply over two or more different interfaces including, for example, a telephone interface and/or a network-based (e.g., HTTP, SNMP) interface and/or a serial interface. In further embodiments, the invention involves one or methods that may be implemented using a data handling device or system, such as a computer or other information enabled device. In further embodiments, the invention involves methods and/or systems for power management over a communication network and/or telephone network.

Various strategies have been proposed for performing remote power switching and/or management and/or performing intelligent scheduling of the turning on and turning off of power cycling. According to specific embodiments, the present invention is involved with methods and/or systems and/or devices that can be used together or independently to monitor and/or control power supplies. In specific embodiments, the present invention can be understood as involving new methods related to power management.

A smart power supply according to specific embodiments of the invention further includes one or more novel features such as: individual current monitoring of power outlets; user adjustable stagger starting and/or outlet scheduling; and text-based menu drive telnet and serial interface.

The invention and various specific aspects and embodiments will be better understood with reference to the following drawings and detailed descriptions. For purposes of clarity, this discussion refers to devices, methods, and concepts in terms of specific examples. However, the invention and aspects thereof may have applications to a variety of types of devices and systems. It is therefore intended that the invention not be limited except as provided in the attached claims and equivalents.

Furthermore, it is well known in the art that logic systems and methods such as described herein can include a variety of different components and different functions in a modular fashion. Different embodiments of the invention can include different mixtures of elements and functions and may group various functions as parts of various elements. For purposes of clarity, the invention is described in terms of systems that include many different innovative components and innovative combinations of innovative components and known components. No inference should be taken to limit the invention to combinations containing all of the innovative components listed in any illustrative embodiment in this specification.

In some of the drawings and detailed descriptions below, the present invention is described in terms of the important independent embodiment of a system operating on a digital data network. This should not be taken to limit the invention, which, using the teachings provided herein, can be applied to other situations, such as cable television networks, wireless networks, etc. Furthermore, in some aspects, the present invention is described in terms of client/server systems. A number of computing systems and computing architectures are described in the art as client/server art. For the purposes of this description, client/server should be understood to include any architecture or configuration wherein an element acting as a client accesses a remote and/or separate program or device that is providing the desired service (e.g., a server).

All references, publications, patents, and patent applications cited herein are hereby incorporated by reference in their entirety for all purposes. In the drawings:
FIG. 1 is a block diagram illustrating an example initial serial interface and method according to specific embodiments of the present invention.
FIG. 2 is a block diagram illustrating an example serial settings interface and method according to specific embodiments of the present invention.
FIG. 3 is a block diagram illustrating an example serial time/date interface and method according to specific embodiments of the present invention.
FIG. 4 is a block diagram illustrating an example serial network interface and method according to specific embodiments of the present invention.
FIG. 5 is a block diagram illustrating an example serial telephone interface and method according to specific embodiments of the present invention.
FIG. 6 is a block diagram illustrating an example email interface and method according to specific embodiments of the present invention.
FIG. 7 is a block diagram illustrating an example user settings interface and method according to specific embodiments of the present invention.
FIG. 8 is a block diagram illustrating an example user modification interface and method according to specific embodiments of the present invention.
FIG. 9 is a block diagram illustrating an example initial web-based interface and method according to specific embodiments of the present invention.
FIG. 10 is a block diagram illustrating an example outlet scheduling interface and method according to specific embodiments of the present invention.
FIG. 11 is a block diagram illustrating an example outlet label and properties modification interface and method according to specific embodiments of the present invention.
FIG. 12 is a block diagram illustrating an example logging interface and method according to specific embodiments of the present invention.
FIG. 13 is a block diagram illustrating an example user interface and method according to specific embodiments of the present invention.
FIG. 14 is a block diagram illustrating an example user modification interface and method according to specific embodiments of the present invention.
FIG. 15 is a block diagram illustrating an example web-based setup interface and method according to specific embodiments of the present invention.
FIG. 16 is a block diagram illustrating an example network identification interface and method according to specific embodiments of the present invention.
FIG. 17 is a block diagram illustrating an example telephone setup interface and method according to specific embodiments of the present invention.
FIG. 18 is a block diagram illustrating an example logging setup interface and method according to specific embodiments of the present invention.
FIG. 19 is a block diagram illustrating an example date/time setup interface and method according to specific embodiments of the present invention.
FIG. 20 is a block diagram illustrating an example SNMP setup interface and method according to specific embodiments of the present invention.
FIG. 21 is a block diagram illustrating an example options setup interface and method according to specific embodiments of the present invention.
FIG. 22A-B is a diagram illustrating an example of external features and appearance of an example thee connector configurable power supply according to specific embodiments of the present invention.
FIG. 23A-B is a diagram illustrating an example of external features and appearance of an example two connector power supply according to specific embodiments of the present invention.
FIG. 24 is a block diagram illustrating example of logic modules of a configurable power supply according to specific embodiments of the present invention.
FIG. 25 is a block diagram showing a representative example logic device in which various aspects of the present invention may be embodied.

According to specific embodiments, the present invention can be embodied into an example power switch product, sometimes referred to as the SPS (Smart Power Switch)™ power controller. In specific embodiments, a device built according to specific embodiments of the invention can include three different interfaces, such as, for example, serial, telephone, network. Such embodiments may be referred to here as the TriCom™ or the Tri-*n* (with n indicated the number of controlled outlets provided and tri indicated the presence of three interfaces, e.g., Tri-8™). In other embodiments, a device built according to specific embodiments of the invention can include two different interfaces, such as, for example, serial/telephone or serial/network or telephone/network. Such embodiments may be referred to herein as the DualCom™ or the Dual-n (with n indicated the number of controlled outlets provided and tri indicated the presence of three interfaces.

### 1. Interfaces

Thus, a device according to specific embodiments of the present invention is a power distribution unit that utilizes multiple different modes of communication. In particular embodiments, an SPS can be accessed via serial, Ethernet or direct phone. These interfaces can provided either identical functionality or functionality can vary for different interfaces. For example, through the serial and Ethernet interfaces a user can determine and change the state of each outlet, determine the amount of current that each outlet is drawing, and add or modify scheduled on/off events on outlets. In specific embodiments, all of these functions can be performed in real time.

### Serial Interface

According to specific embodiments of the present invention, a serial interface uses a standard serial port protocol, so that any information devices (e.g., a laptop, personal computer, or digital controller) with an available com or com-like port can use this direct connection to the SPS. The serial port can also be used as an initial setup port for the unit. The serial interface can also be an USB-type serial interface.

Other interfaces according to specific embodiments of the present invention are generally setup before they are used. Generally, after initialization, all the settings can be managed through the serial or Ethernet ports.

### Ethernet and Network Interface

According to specific embodiments of the present invention, an Ethernet port can be utilized either through a text based Telnet session or through an HTTP web interface. The telnet session is similar to the serial interface in that its text based and the menus can generally be very similar or identical. A web interface according to specific embodiments of the invention can, for example, utilizes a web browser and the Hypertext Transfer Protocol (HTTP). According to specific embodiments of the present invention, this interface looks and feels different from the others because it is a GUI (graphical user interface). An SNMP interface can be used to control various settings and retrieve various information from the SPS using a standard network management protocol, such as SNMP.

### Email Interface

In addition, the SPS can be configured to email logged events. When this feature is enabled, according to specific embodiments of the present invention, a running log of events is kept and once memory is filled, the log file is sent to a designated email address. Logs can contain information such as the user name, which outlets were changed, time and date of event, and interface and or IP address used.

### Telephone Interface

According to specific embodiments of the present invention, a telephone interface uses a standard analog phone line. This interface is unique in that it uses a few inexpensive parts (such as, for example, a Clare™ CPC5611 as the data access arrangement and a Sunplus™ SPC122a as the voice processor) along with a few other parts. An SPS according to specific embodiments of the present invention has DTMF decoding, caller id, and voice feedback. Once enabled and attached to a phone line, the unit is now ready to receive and process calls. The SPS can be set to accept all calls, block calls without caller ID enabled, or not accept any incoming calls. The SPS is designed so that if a user uses the phone interface he or she is greeted with a voice prompted menu. The unit will ask for a numeric pass code and then prompt the user for the next command. In specific embodiments, though the SPS has a voice prompted menu, it will only respond to (DTMF) telephone tones as commands and not to speech. In further embodiments, speech recognition can be included in a device according to the invention.

An embedded hardware arrangement along with its caller id and voice feedback capabilities according to specific embodiments of the present invention has never been utilized in the present combination in any comparable smart power switch or power distribution units. This interface is not included in all embodiments of the invention.

### Interface features and functions

According to specific embodiments of the present invention, the serial and/or Ethernet interfaces have the ability to:
- change the state of outlets
- assign outlet labels
- assign outlet schedule
- edit and assign users
- edit network, email, and phone interface settings.

A wide variety of configurations are possible according to various specific embodiments of the present invention. Some of these configurations are described herein as examples of the invention. Various configuration details are also elements in novel embodiments of the invention.

According to specific embodiments of the present invention, different features may be accessible from different interfaces. Table 1 below provides an example feature set indicating particular interfaces according to specific embodiments of the present invention.

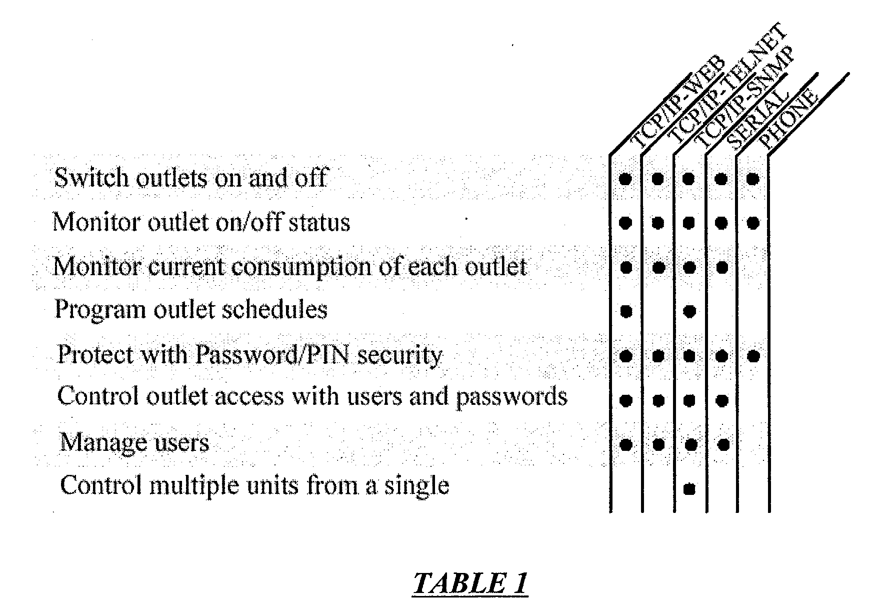

### 2. Detailed Interface Examples and operation

Many different particular arrangements of menus and functions are possible according to specific embodiments of the invention. In order to provide a complete description of example methods of operation according to specific embodiments of the invention, the following describes specific example menus and methods of one or more systems according to the invention.

### Example Serial Connection Interfaces

In specific embodiments, the invention includes a set of interfaces for a direct serial connection. The discussion below and the referenced figures provide specific example embodiments of such interfaces.

### Initialize:

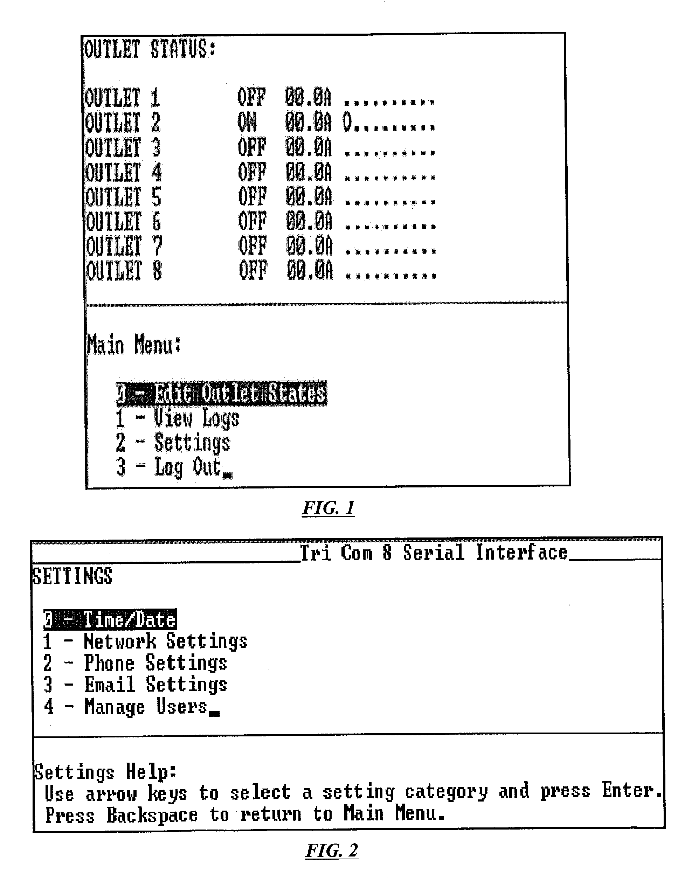

FIG. 1 provides an example of an initial serial interface screen. An example configuration and method of this screen is as follows. Using an appropriate serial cable attached between an SPS according to specific embodiments of the invention and an information screen, such as a terminal or PC, start a Hyper Terminal type session. For example, a connection can be made to COM 1 with the settings: 19200 bit rate, 8 data bits, parity=none, stop bits=1, and Flow control= none.

Once connected, log on with a user name and password. Once logged in type 0 for editing outlet states, 1 to view logs or 2 to edit settings.

### Edit Settings

FIG. 2 provides an example settings menu according to specific embodiments of the invention. In the settings menu a user can set such things as Time/Date, Network Settings, E-mail Settings, and Manage Users. For example, to edit a category a user can use arrow keys or a mouse to select the category or type a corresponding number or letter for the listed function. Note, in a Dual-Com, for example, either the network settings or phone setting may not be present.

### Settings Time/Date:

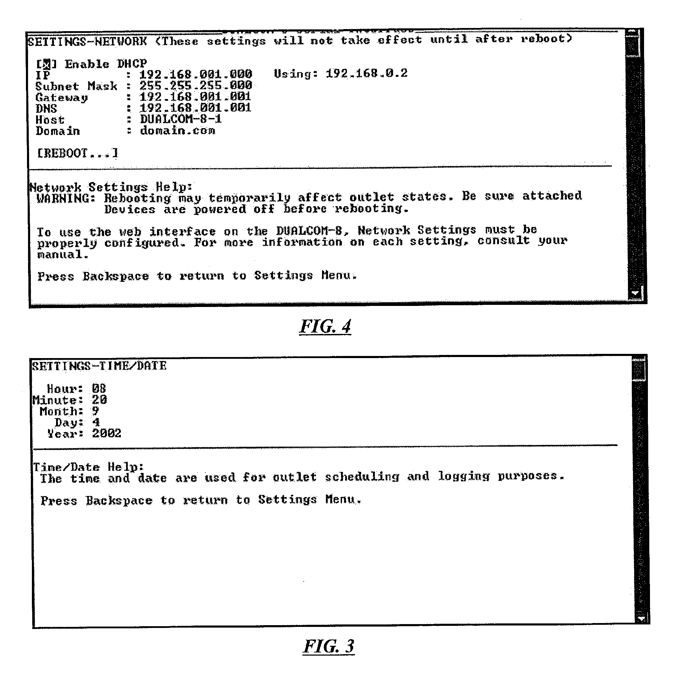

FIG. 3 provides an example time/date settings menu according to specific embodiments of the invention. This interface can be used by, for example, scrolling to the proper heading and pressing enter to change a value and once the values have been changed press enter to finalize.

### Settings Network:

FIG. 4 provides an example network settings menu according to specific embodiments of the invention. This interface can be used by, for example, scrolling to the proper heading and pressing enter to change a value and once the values have been changed press enter to finalize. This procedure may be repeated for all network settings. Network settings can include such things as values for IP addressing, host and/or domain names, enablement of DHCP, SNMP, or other functions, etc. In specific embodiments, once all network settings have been made the Tricom must be rebooted in order for the new settings to take affect.

According to specific embodiments of the invention, seven settings are provided here: Enable DHCP (This is set to on as default so that if there is a a DHCP server the SPS will get it's IP address from it. If so it will show up under the Using: section and it will be different than 192.168.1.2 [the default if no DHCP Server is found].); IP; Subnet Mask; DNS; Gateway; Host; and Domain.

### Settings Telephone:

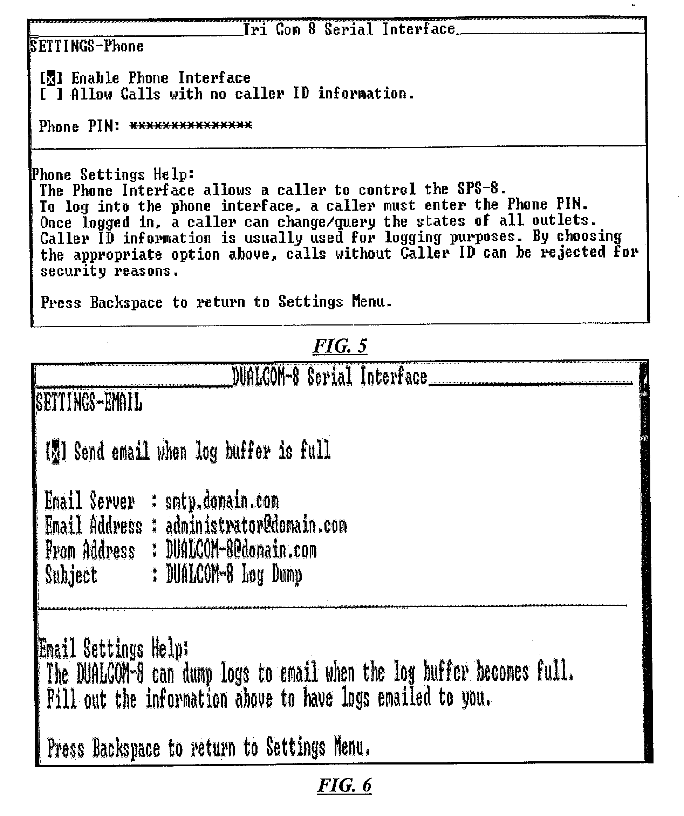

FIG. 5 provides an example telephone settings menu according to specific embodiments of the invention. This interface can be used by, for example, scrolling to the proper heading and pressing enter to change a value. Telephone settings can include such things as values for a phone personal identification number (PIN) and/or enablement of various telephone functions. In embodiments without a telephone interface, this menu may not be available.

### Settings Email:

FIG. 6 provides an example email settings menu according to specific embodiments of the invention. This interface can be used by, for example, scrolling to the proper heading and pressing enter to change a value. Email settings can include such things as values for a email address and/or server and/or email heading values and/or and/or enablement of various email functions. In embodiments without an email interface, this menu may not be available.

### Settings Users:

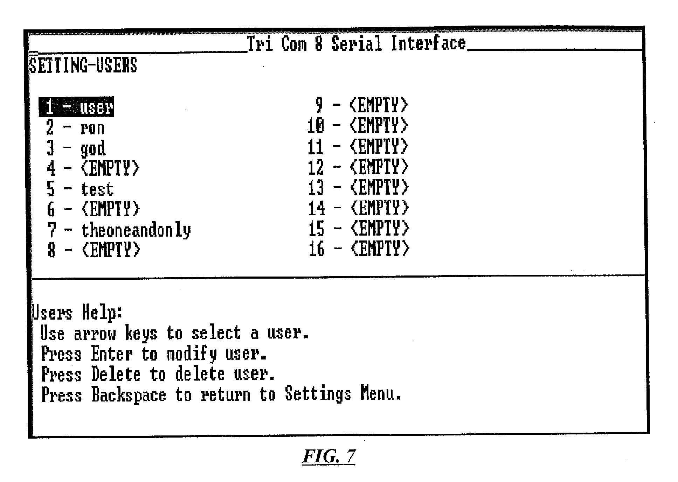

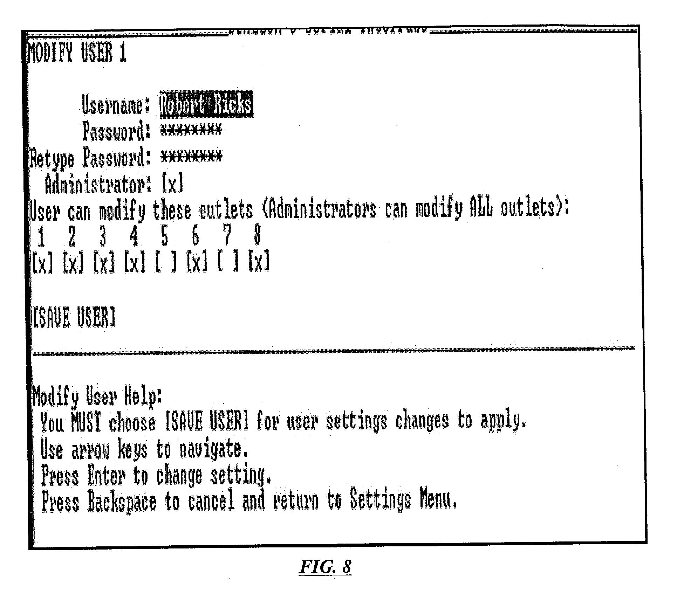

FIG. 7 provides an example initial user settings menu and FIG. 8 provides an example user modification settings menu according to specific embodiments of the invention. This interface can be used by, for example, scrolling to the proper heading and pressing enter to change a value. User settings can include such things as user names , passwords, administrator indications, permissions. Permissions can include individual outlet modification permissions.

### Example Web Connection Interfaces

In specific embodiments, the invention includes a set of interfaces for a web-based connection. The discussion below and the referenced figures provide specific example embodiments of such interfaces. Once a network port (such as Ethernet) has been configured with the proper addressing, a user can access a SPS according to specific embodiments of the present invention through such things as a telnet session or through a web browser. According to specific embodiments of the invention, the Telnet session is text based and menu driven and has the same look and feel as the serial connection described above. A web interface is optimized for use in all web browsers, such as Internet Explorer.

To begin using the web interface, start a web browser and input an SPS's network identification (e.g., an IP and/or domain name address) Once found, an example SPS can prompt for a log on, for example using a popup window requesting a user name and password or alternatively, by retrieving saved passwords.

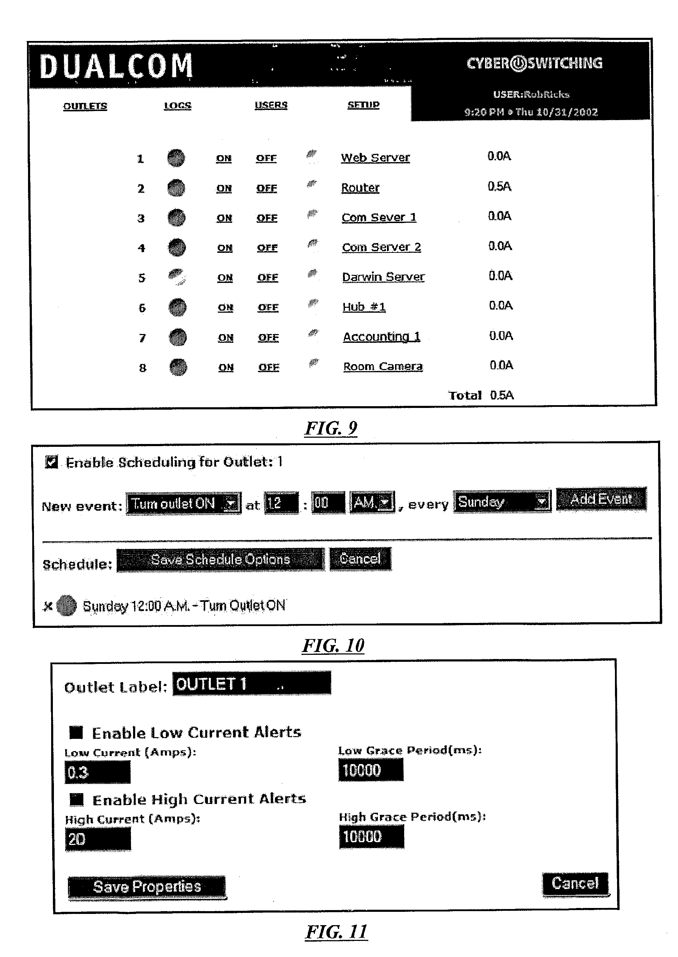

FIG. 9 provides an example of web-based interface screen according to specific embodiments of the invention. This example figure shows a number of different possible functionalities according to specific embodiments of the invention.

For example, the four underlined links at the top of the interface can have the following functions:
**OUTLETS:** change the state of outlets, setup scheduling, rename outlets and view current draw (e.g., amperage) per outlet.
**LOGS:** shows previous events (e.g., the last 30) that have occurred.
**USERS:** add, edit and delete users to the unit
**SETUP:** network, time/date and preference settings. Generally, only users with administrator privilege's can access the setup and users tabs.

According to specific embodiments of the invention, outlet management can be handled as follows. To change the state of any outlet simply click the outlet indication on or off. A round indicator button can provide a color indication of outlet status, e.g., green indicating that the outlet is on and white indicating that the outlet is off. To rename an outlet, click on a label given to the outlet, e.g., "Com Server 2" and in either a popup box or the link enter the new name then click Save Label. Generally, according to specific embodiments of the invention, unless a user is an administrator, the user's selection of outlets is limited to what your administrator has assigned. Common users also have no access to logs, users, and setup.

According to specific embodiments of the invention, scheduling for individual outlets can be performed as follows. To set a scheduled task select, for example, a clock icon that corresponds to the outlet for which it is desired to set the schedule. FIG. 10 is a block diagram illustrating an example outlet scheduling interface and method according to specific embodiments of the present invention. Once the outlet is selected, add events by for example changing time, day and then clicking on the Add Event button. Before clicking the Save Schedule Options button, click in the box that indicates scheduling is enabled for this outlet.

FIG. 11 is a block diagram illustrating an example outlet label and properties modification interface and method according to specific embodiments of the present invention. This interface can be used to change outlet labels and adjust other outlet properties.

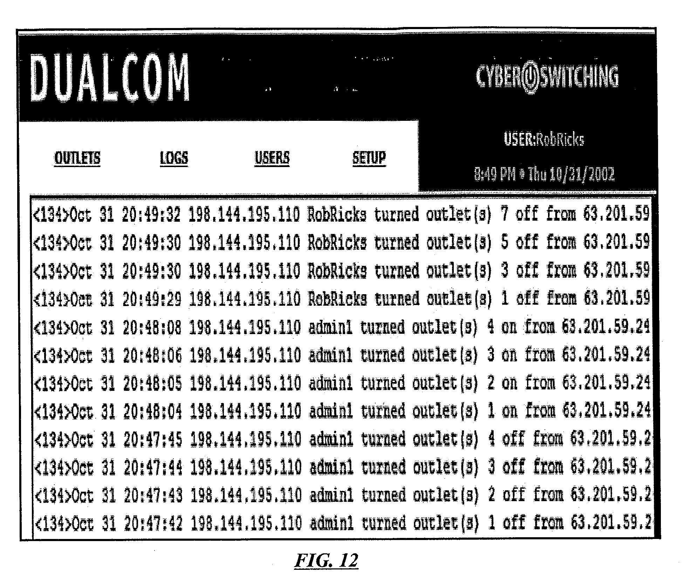

FIG. 12 is a block diagram illustrating an example logging interface and method according to specific embodiments of the present invention. According to specific embodiments of the invention, an SPS keeps a running log of events which, if enabled, can be e-mailed to a designated person. For example, in specific embodiments, once the log file is filled the log is then e-mailed and the memory buffer is then cleared and refreshed. If not setup to E-mail, the unit will then overwrite the oldest event, keeping the log current. Logs may generally also be sent or cleared manually be clicking an appropriate heading that can be provided in specific embodiments.

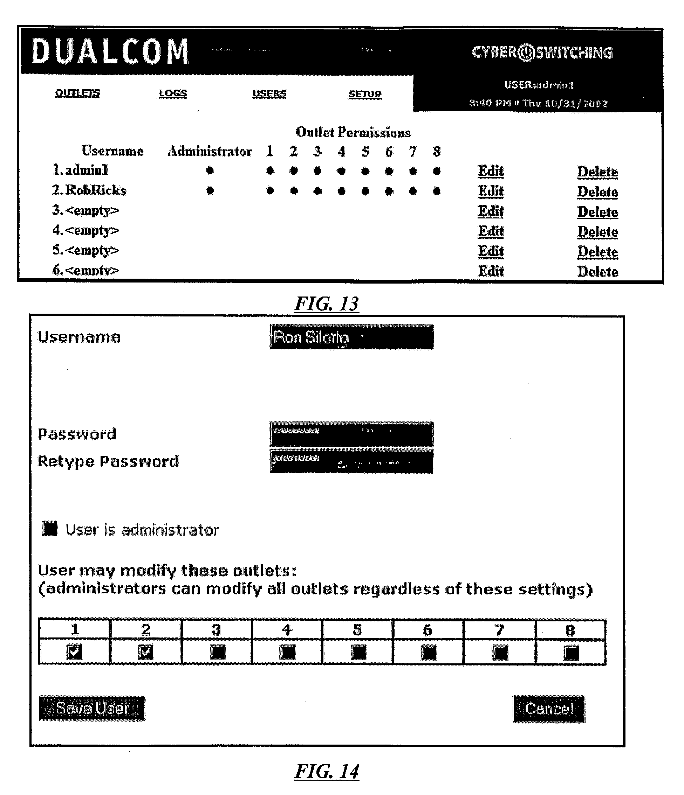

FIG. 13 is a block diagram illustrating an example user interface and method according to specific embodiments of the present invention. To access the users tab generally a user has to be an administrator. To add or edit an existing user click edit in the row desired. In the popup box enter a user name, password and select the outlets the new user will be able to access. Once the information is complete click the Save User button and the user may now log in. To completely remove a user, indicate delete. FIG. 14 is a block diagram illustrating an example user modification interface and method according to specific embodiments of the present invention.

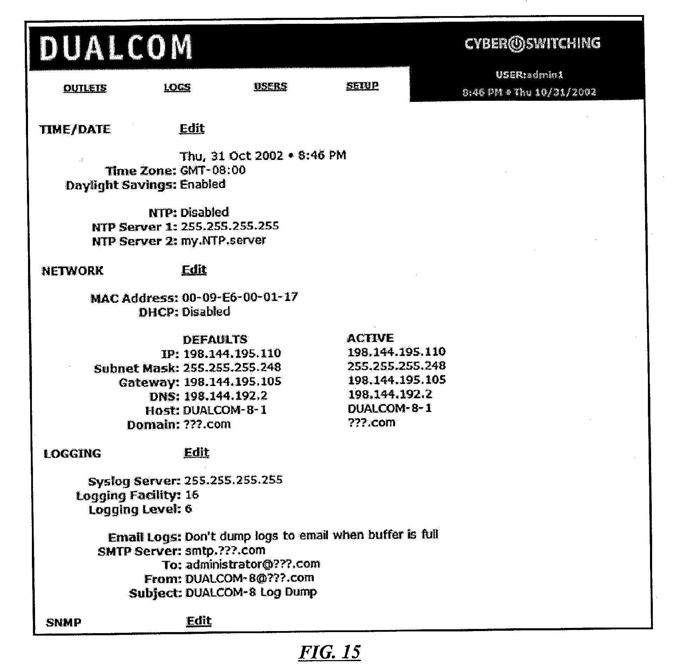

FIG. 15 is a block diagram illustrating an example web-based setup interface and method according to specific embodiments of the present invention. This interface provides information about such things as time/date, network settings, logging settings, SNMP settings, can also provide information about telephone settings in an SPS with a telephone interface. Generally, this interface is only accessible to administrators. To make changes using this interface, use the edit button that corresponds to the appropriate heading. For example, to set TIME/DATE, click the corresponding edit button, make the proper changes then click Save.

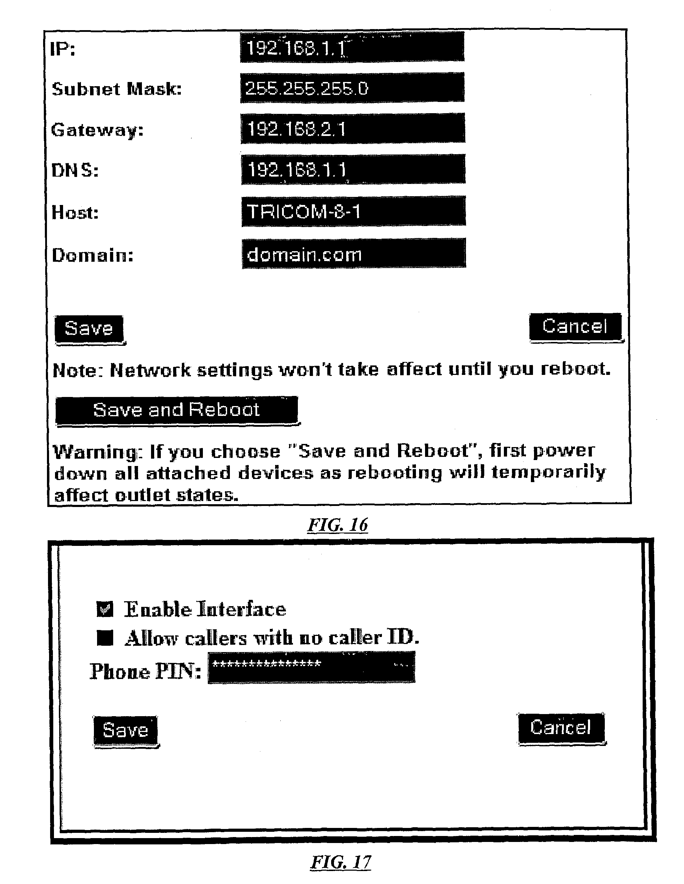

FIG. 16 is a block diagram illustrating an example network identification interface and method according to specific embodiments of the present invention. This interface can, for example, be provided as a popup box from the overall settings interface. In this interface, enter the IP address to assign to the unit. Enter the units Subnet Mask, DNS, host, and domain name. Once all fields are filled in, click the Save and Reboot button. Generally, network settings will not take affect until the unit has been rebooted.

FIG. 17 is a block diagram illustrating an example telephone setup interface and method according to specific embodiments of the present invention. To setup the telephone interface, click on the corresponding edit button. By placing a check mark in the "enable interface" box, all calls will be processed by the Tricom. However, if there is no check mark at "Allow callers with no caller ID" the unit will then only answer calls with a caller ID tag and reject all others.

In SPS units with a telephone interface, enabled as described above, the physical interface according to specific embodiments of the present invention can be connected using a standard analog phone line to the phone jack on the front panel of the SPS. Once connected to an analog phone line and the interface is enabled, the SPS can now be reached and controlled independently from a network or a computer. From an office desk phone to a private cell phone, there is a truly remote means of control. The SPS can be configured to block calls from restricted or unavailable phones. The phone number of the telephone from which a user is calling from must be received by the SPS in order to access the main menu. According to specific embodiments of the present invention, a system can be configured to "Allow callers with no caller ID," though due to security reasons this is not recommended.

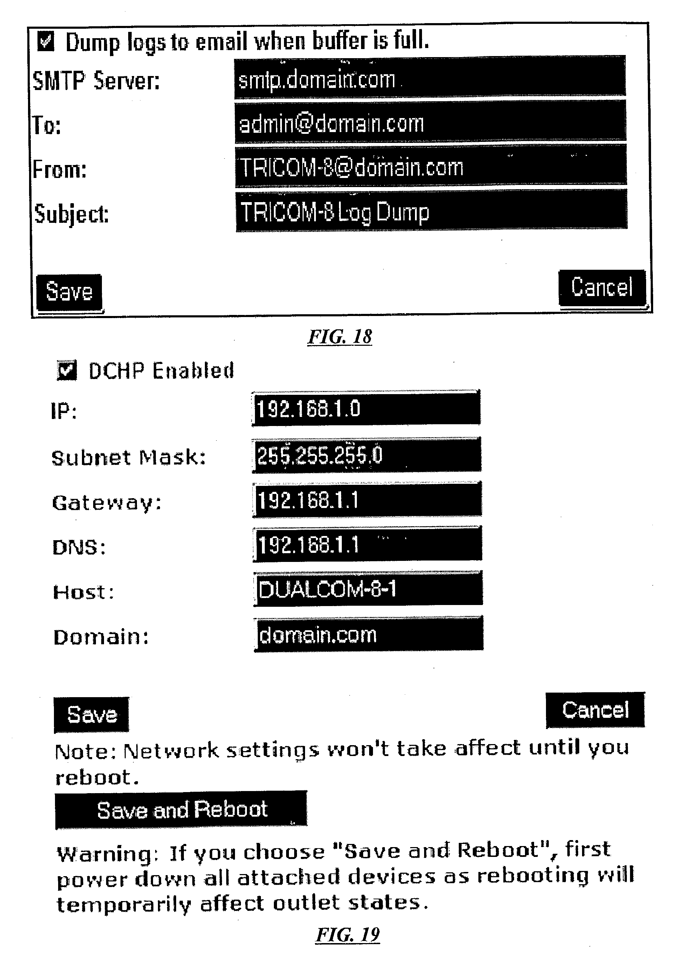

FIG. 18 is a block diagram illustrating an example logging setup interface and method according to specific embodiments of the present invention. Under the Logging heading administrators can setup E-mail properties and server settings. To enable the E-mail logs feature click the corresponding edit button. In the popup box, enter the SMTP server name as well as the E-mail address of the person to receive the logs. The "From" and "Subject" boxes are not re-quired to send the log as well as fill in the "From" and "Subject" boxes. Once all entries and the "Dump logs to E-mail..." box is checked, click the save button. The unit is now ready to send the log once the buffer is full. According to specific embodiments of the present invention, the SMTP server acts as an outgoing E-mail server. If you don't have this information please consult your network administrator. With out the proper SMTP server, the unit will not be able to E-mail out the logs regardless of all the other settings.

FIG. 19 is a block diagram illustrating an example date/time setup interface and method according to specific embodiments of the present invention. To configure the NTP settings with an NTP Server addressing delete the default settings and ensure that there is a check in the " Enable NTP" checkbox. Once settings are entered a user can indicate "Save" and the page will refresh with the new time/date that the SPS received from the local NTP servers. To manually set "Time/Date" uncheck the "Enable NTP" check box, though it is highly recommend use an NTP server.

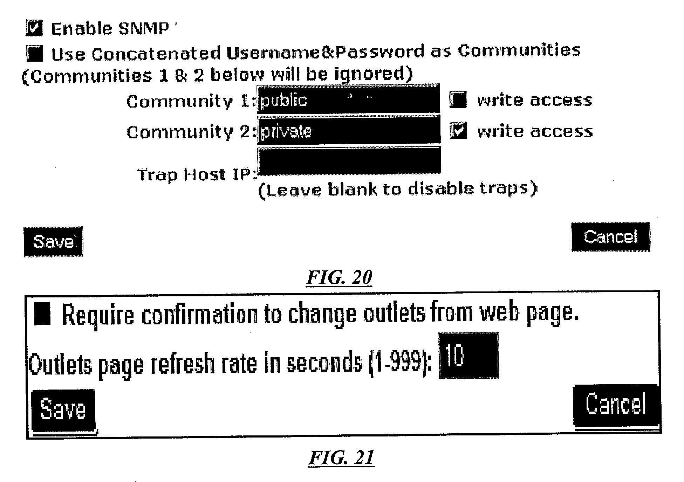

FIG. 20 is a block diagram illustrating an example SNMP setup interface and method according to specific embodiments of the present invention. SNMP is by default set to enabled which may cause a security risk. It is therefore suggested to set this to disabled if not used. The MIB listing below provides additional information about a specific example SNMP interface according to specific embodiments of the present invention.

FIG. 21 is a block diagram illustrating an example options setup interface and method according to specific embodiments of the present invention. This interface can be provided to change behavioral settings such as refresh rates and outlet change confirmations. To avoid accidental on/offs, require confirmation for each on/off event on the web by placing a check in the Require confirmation box. With this feature enabled users will have to click on or off then OK or cancel for each outlet change. The Refresh rate is user definable from 1-999 seconds. Once set the Outlets page will now refresh to the specified time. If the refresh rate is set too fast, the system may not have enough time to load the entire page. Regardless of the refresh rate setting the network speed will determine how fast a page is loaded. A default example setting is at 10 seconds.

### Software Implementations

Thus, in further embodiments, the present invention may be understood in the context of providing power management over a communication media. An important application for the present invention, and an independent embodiment, is in the field of providing power cycling and monitoring over the Internet, optionally using Internet media protocols and formats, such as HTTP, RTTP, XML, HTML, dHTML, VRML, as well as image, audio, or video formats etc. However, using the teachings provided herein, it will be understood by those of skill in the art that the methods and apparatus of the present invention could be advantageously used in other related situations where users access content over a communication channel, such as modem access systems, institution network systems, wireless systems, etc.

Various embodiments of the present invention provide methods and/or systems for power management and/or monitoring that can be implemented on a general purpose or special purpose information handling appliance using a suitable programming language such as Java, C++, Cobol, C, Pascal, Fortran., PL1, LISP, assembly, etc., and any suitable data or formatting specifications, such as HTML, XML, dHTML, TIFF, JPEG, tab-delimited text, binary, etc. In the interest of clarity, not all features of an actual implementation are described in this specification. It will be understood that in the development of any such actual implementation (as in any software development project), numerous implementation-specific decisions must be made to achieve the developers' specific goals and subgoals, such as compliance with system-related and/or business-related constraints, which will vary from one implementation to another. Moreover, it will be appreciated that such a development effort might be complex and time-consuming, but would nevertheless be a routine undertaking of software engineering for those of ordinary skill having the benefit of this disclosure.

As will be further understood from the teachings provided herein, the present invention encompasses a variety of specific embodiments for performing these steps. As further described below, request for power management and monitoring information may be received in a variety of ways, including through one or more graphical user interfaces provided by an SPS to the client system or by the SPS system receiving an email or other digital message or communication from the client system. Thus, according to specific embodiments of the present invention, data and/or indications can be transmitted to the SPS using any method for transmitting digital data, including HTML communications, FTP communications, email communications, wireless communications, etc. In various embodiments, indications of desired data can be received from a human user selecting from a graphical interface at a computing device.

### Example Hardware Functional Components

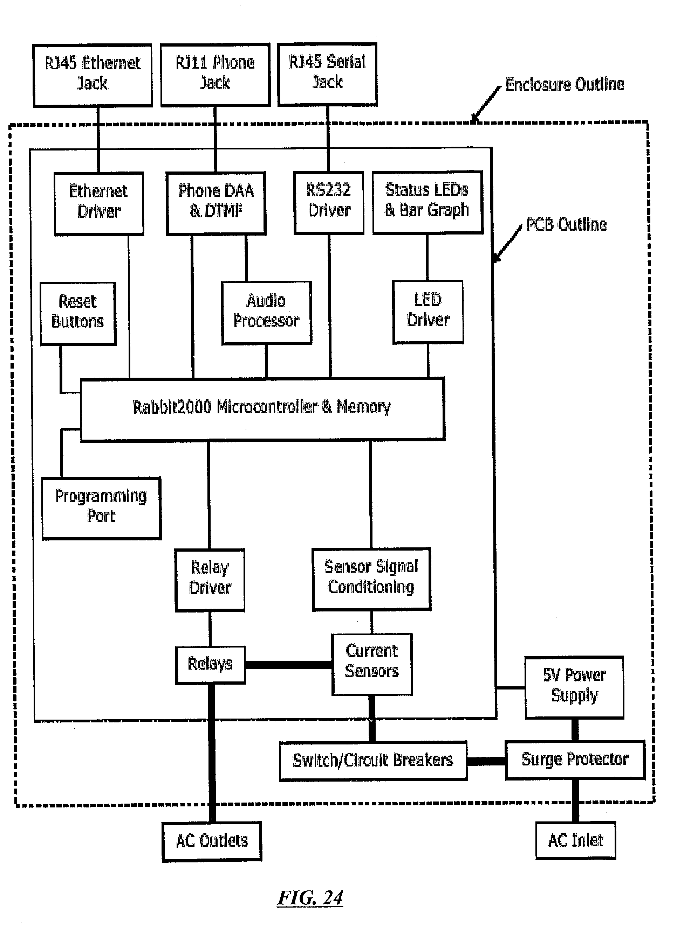

FIG. 24 is a block diagram illustrating example of logic modules of a configurable power supply according to specific embodiments of the present invention. This is one example embodiment showing a number of different novel elements, not of all which will be a part of all embodiments.

In this example embodiment, various functions as described above are provided by a microprocessor executing a stored-program, such as, for example, a Rabbit2000 Microcontroller and Memory. According to specific embodiments of the invention, the microcrontroller provides the logical execution ability to both control the outlets using a relay driver and relays as shown and also to provide communications ability through two or more interfaces, such as an Ethernet interface comprising an Ethernet connector (jack) and driver, a phone interface comprising a phone connector (jack) and phone DAA & DTMF along with an audio processor for generating audio status indications and/or for recognizing speech commands, a serial interface comprising a serial connector (e.g.,, a RJ45 serial jack and/or a USB connection) and appropriate drivers, and an external LED interface comprising one or more LEDs and an LED driver.

According to specific embodiments of the invention, current sensors are provided for each outlet and a sensor signal conditioning module and/or function provides information to the microcontroller for use in reporting current status and/or also for use in providing current control. A surge protector, switch/circuit breaker, and digital operating voltage power supply (e.g., 5 volts or 3.3 volts, etc.) are also included.

Any number of different brands of available modules can be used in an example system as illustrated in FIG. 24.

### Example External Hardware System Configuration

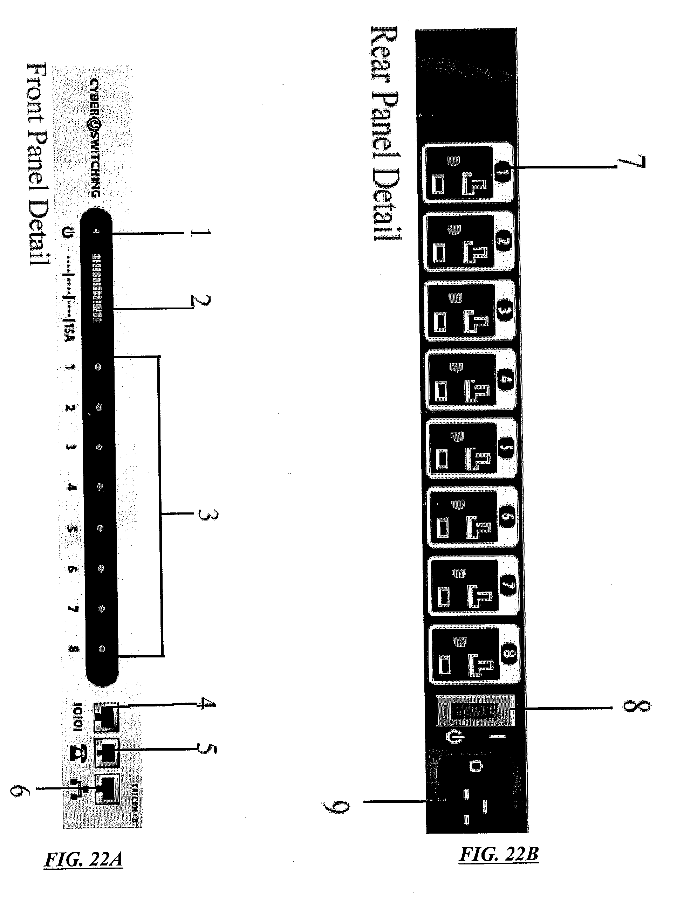

FIG. 22A-B is a diagram illustrating an example of external features and appearance of an example thee connector configurable power supply according to specific embodiments of the present invention. The figures illustrate the following example elements:
- 1:: Unit power indicator
- 2:: Over-all amperage usage meter
- 3:: Outlet indicator
- 4:: Serial port
- 5:: Direct phone line connection (not a modem port)
- 6:: Ethernet port
- 7:: AC outlets
- 8:: Outlets on/standby switch
- 9:: AC inlet receptacle

Various modifications of this basic design according to specific embodiments of the present invention are possible. For example, designs can have various desired numbers of outlets, such as 1, 2, 3, 4, 8, 16, 24 etc.

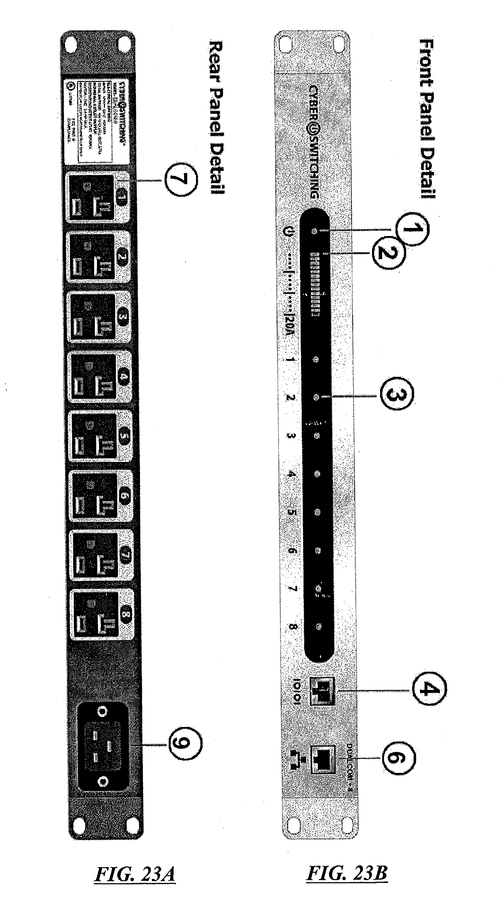

FIG. 23A-B is a diagram illustrating an example of external features and appearance of an example two connector power supply according to specific embodiments of the present invention. In this example embodiment, the phone interface and outlets on/standby switch are not provided on the panels shown.

According to specific embodiments of the invention, an SPS is designed to be mounted into a standard, 19 inch, network rack or cabinet. If mounted in the horizontal position the SPS takes up 1 rack unit of space. While many other dimensions are possible, in specific embodiments, the invention provides the described functionality in a system having total dimensions less than about a 1RU for 19" rack, or 17" wide x 8.38" deep x 1.75" high.

### Example SNMP MIB

As is known in the art, SNMP operates using data structures known as MIBs. Provided below is one example MIB that provides further details of a specific embodiment of the invention.

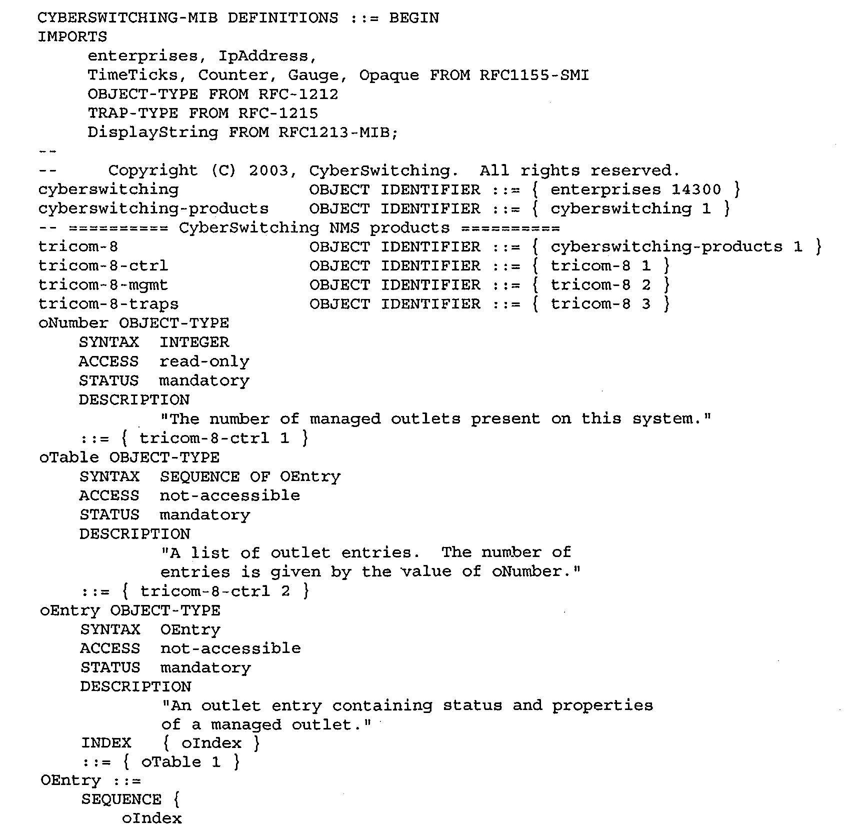

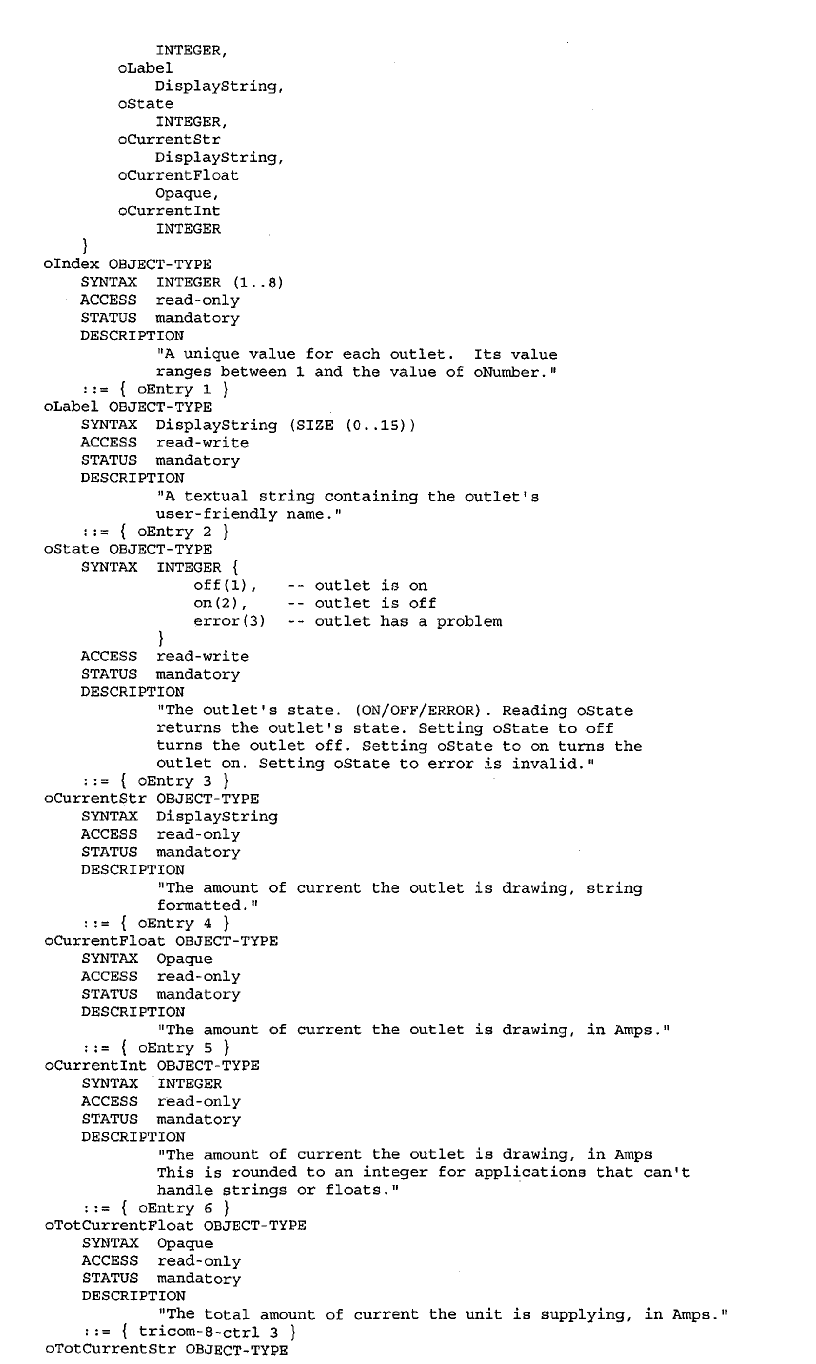

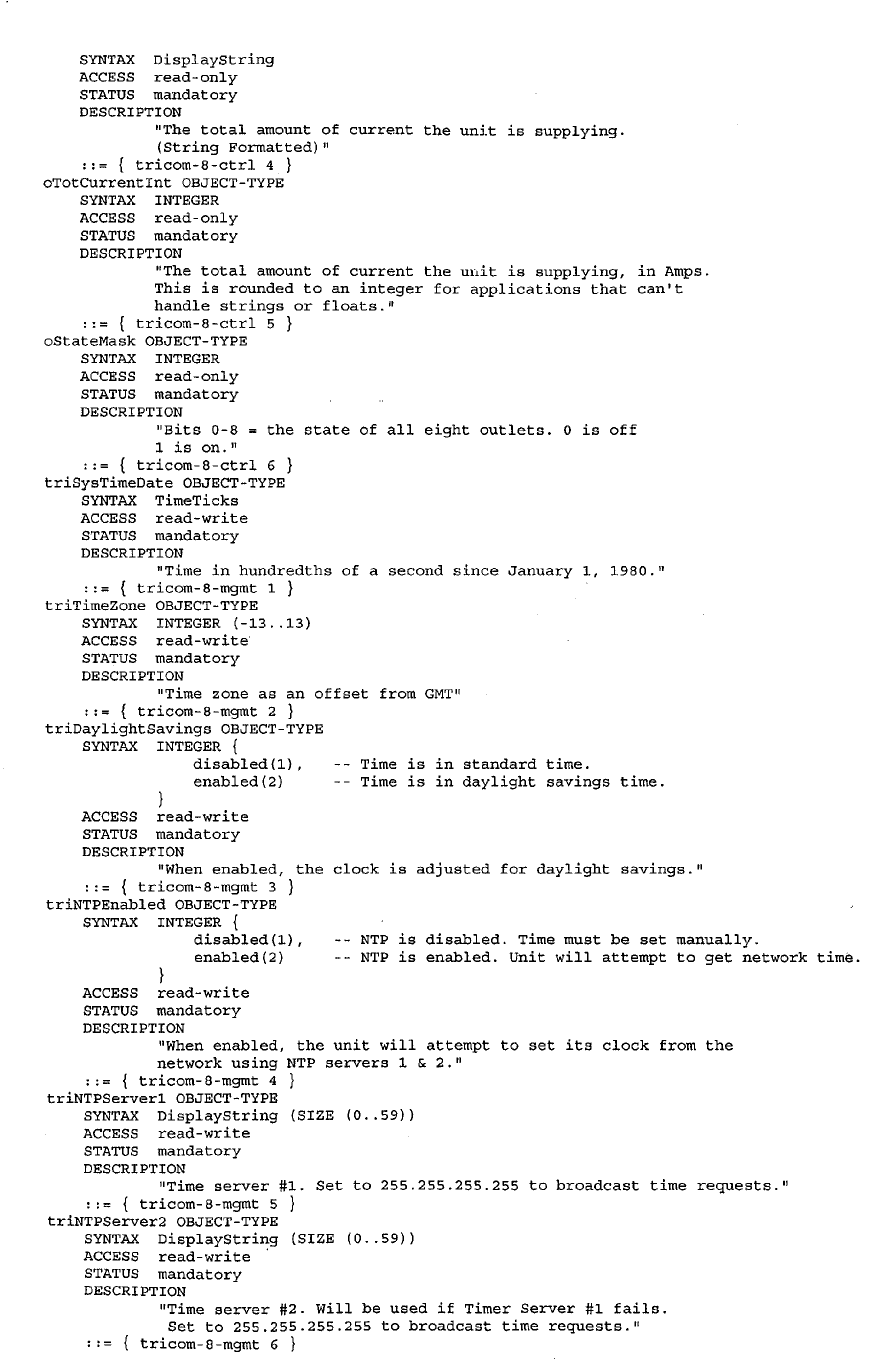

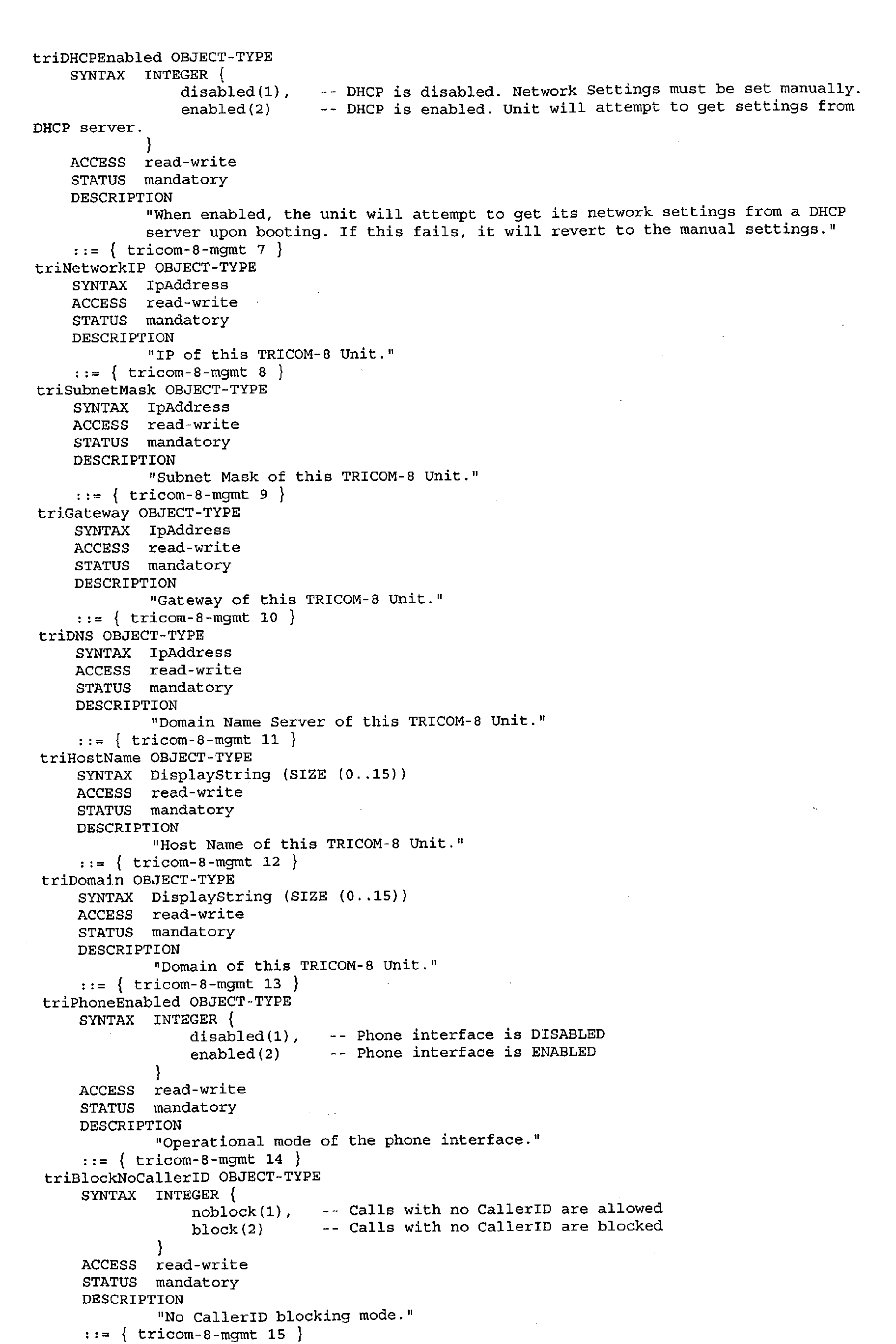

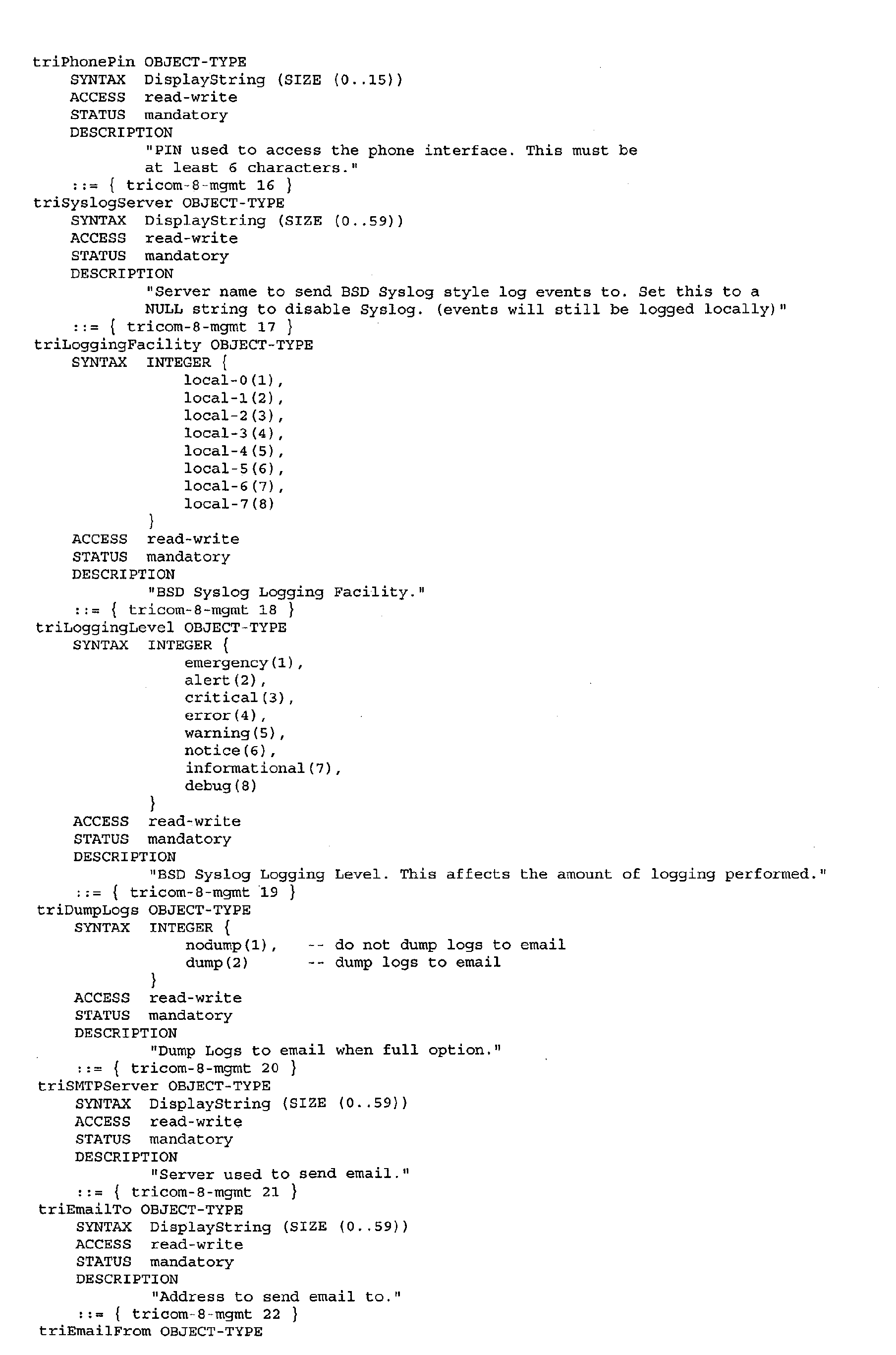

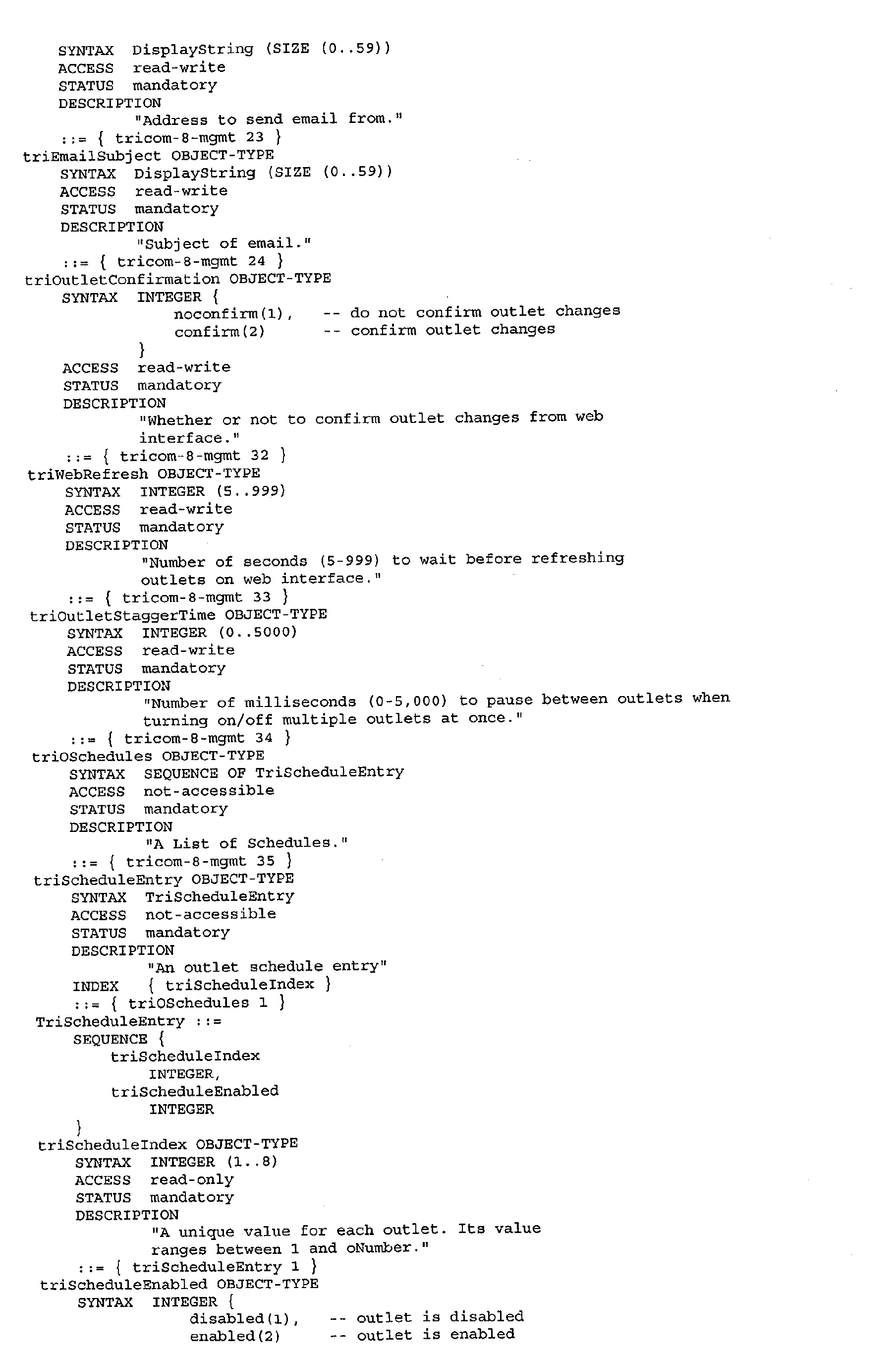

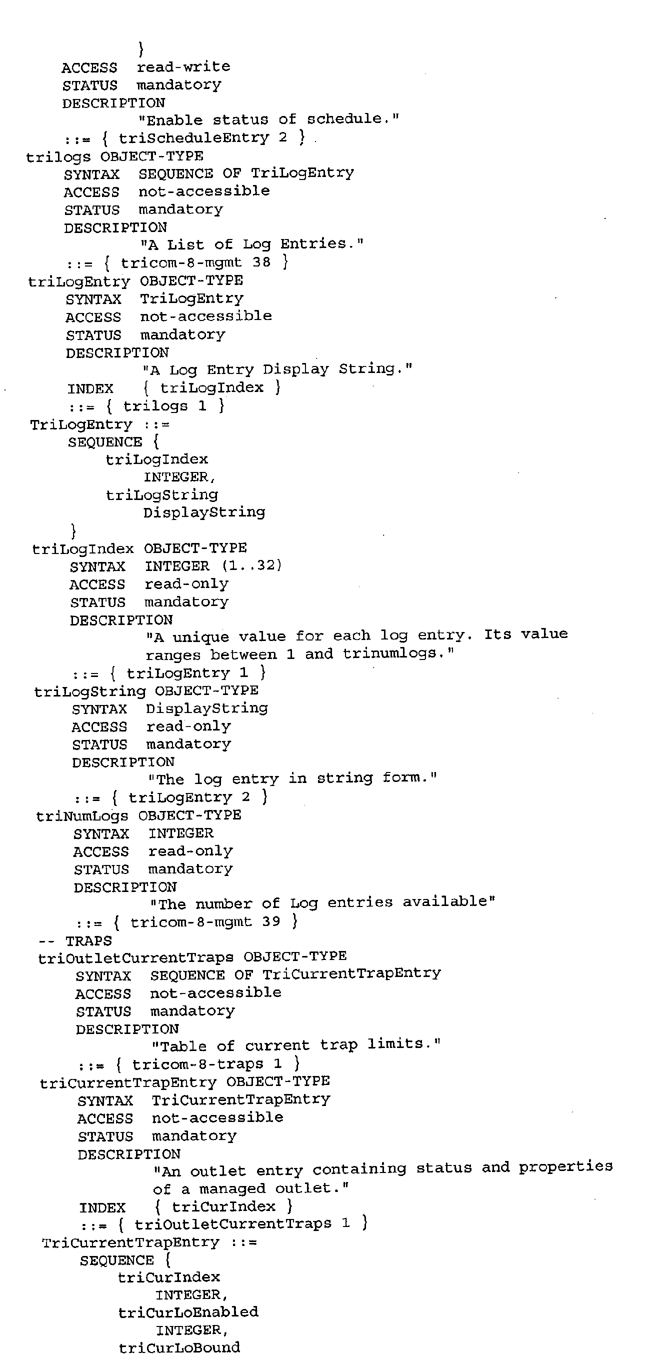

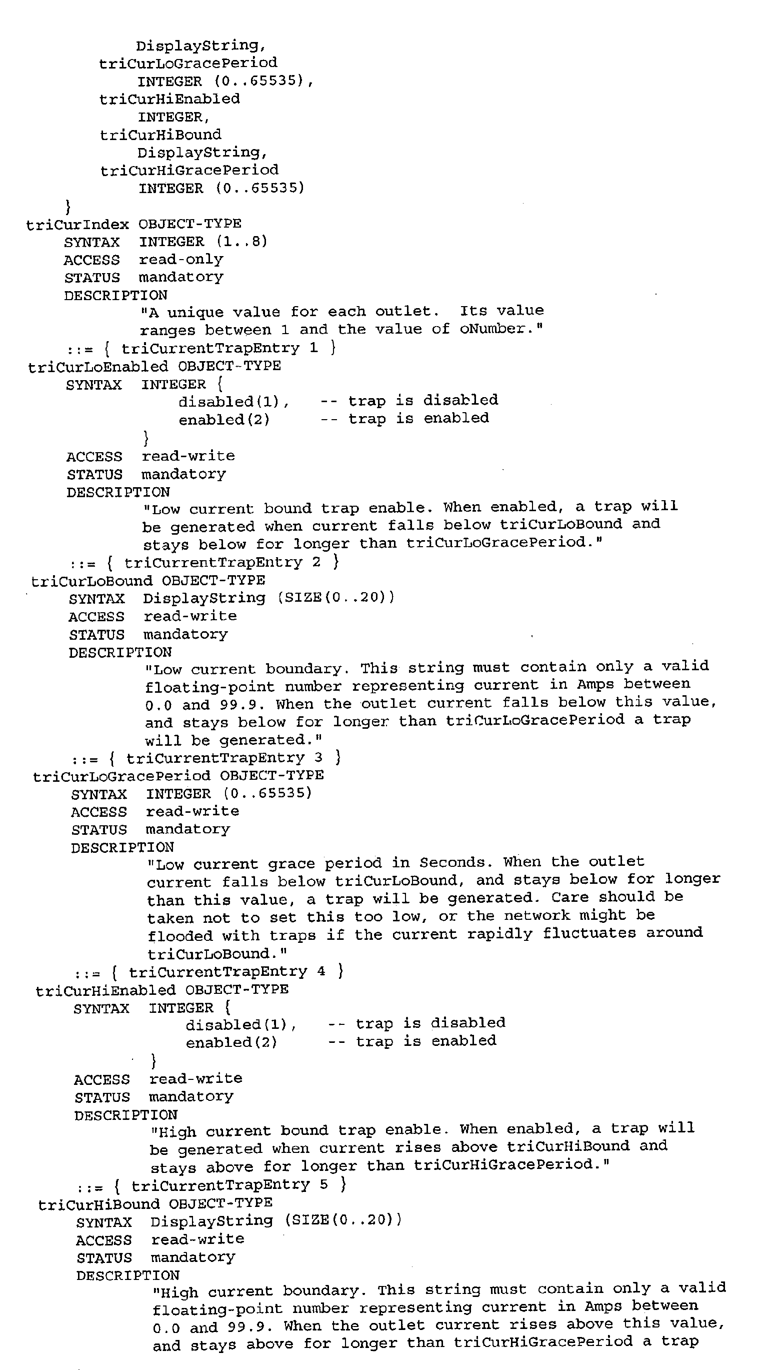

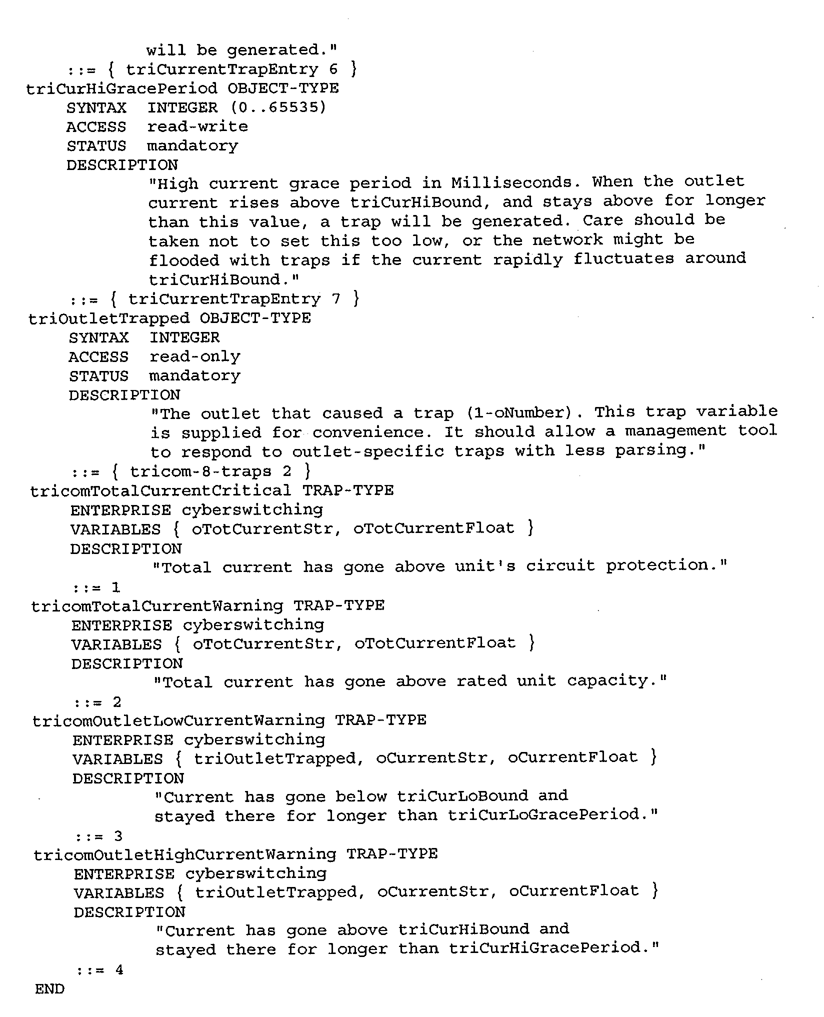

### Embodiment in a Programmed Information Appliance

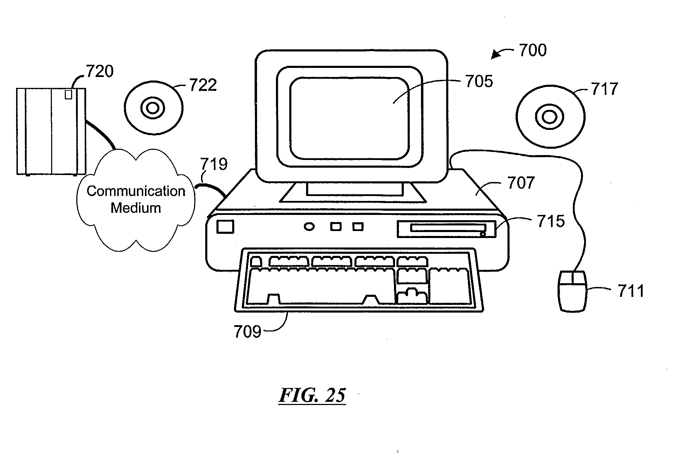

FIG. 25 is a block diagram showing a representative example logic device in which various aspects of the present invention may be embodied. As will be understood to practitioners in the art from the teachings provided herein, the invention can be implemented in hardware and/or software. In some embodiments of the invention, different aspects of the invention can be implemented in either client-side logic or server-side logic. As will be understood in the art, the invention or components thereof may be embodied in a fixed media program component containing logic instructions and/or data that when loaded into an appropriately configured computing device cause that device to perform according to the invention. As will be understood in the art, a fixed media containing logic instructions may be delivered to a viewer on a fixed media for physically loading into a viewer's computer or a fixed media containing logic instructions may reside on a remote server that a viewer accesses through a communication medium in order to download a program component.

FIG. 25 shows an information appliance (or digital device) 700 that may be understood as a logical apparatus that can read instructions from media 717 and/or network port 719, which can optionally be connected to server 720 having fixed media 722. Apparatus 700 can thereafter use those instructions to direct server or client logic, as understood in the art, to embody aspects of the invention. One type of logical apparatus that may embody the invention is a computer system as illustrated in 700, containing CPU 707, optional input devices 709 and 711, disk drives 715 and optional monitor 705. Fixed media 717, or fixed media 722 over port 719, may be used to program such a system and may represent a disk-type optical or magnetic media, magnetic tape, solid state dynamic or static memory, etc.. In specific embodiments, the invention may be embodied in whole or in part as software recorded on this fixed media. Communication port 719 may also be used to initially receive instructions that are used to program such a system and may represent any type of communication connection.

The invention also may be embodied in whole or in part within the circuitry of an application specific integrated circuit (ASIC) or a programmable logic device (PLD). In such a case, the invention may be embodied in a computer understandable descriptor language, which may be used to create an ASIC, or PLD that operates as herein described.

### Other Embodiments

The invention has now been described with reference to specific embodiments. Other embodiments will be apparent to those of skill in the art. In particular, a viewer digital information appliance has generally been illustrated as a personal computer. However, the digital computing device is meant to be any information appliance for interacting with a remote data application, and could include such devices as a digitally enabled television, cell phone, personal digital assistant, laboratory or manufacturing equipment, etc. It is understood that the examples and embodiments described herein are for illustrative purposes and that various modifications or changes in light thereof will be suggested by the teachings herein to persons skilled in the art and are to be included within the spirit and purview of this application and scope of the claims.

Furthermore, various different actions can be used to effect power management. For example, a voice command may be spoken by the purchaser, a key may be depressed by the purchaser, a button on a client-side scientific device may be depressed by the user, or selection using any pointing device may be effected by the user.

All publications, patents, and patent applications cited herein or filed with this application, including any references filed as part of an Information Disclosure Statement, are incorporated by reference in their entirety.

## Claims

1. A method allowing a user to remotely manage a plurality of power outlets from a multiple outlet power switch comprising:
providing at least two user interfaces;
providing individual outlet current monitoring results;
providing at least one interface allowing a user to independently schedule events for each of said power outlets;
registering user indications to configure and/or change operating states of said outlets;
using a microcontroller operatively connected to said outlets to change states and/or configurations of said outlets in accordance with said user indications.

2. The method of claim 1 further wherein:
said at least two user interfaces are two or more selected from:
an web-based interface;
a telephone interface;
a telnet interface;
an email interface;
a serial interface; or
an SNMP interface.

3. The method of claim 2 further wherein:
said telnet interface and/or said serial interface are menu driven text-based interfaces.

4. The method of claim 1 further comprising:
accepting initial configuration through a direct connection interface; and
subsequently interacting with users through one or more additional interfaces.

5. The method of claim 1 further comprising:
accepting user indications of a time server;
automatically updating the time using said time server.

6. The method of claim 1 further comprising:
accepting indications registering one or more non-administrator users;
granting non-administrator users access individually to one or more of said outlets.

7. A smart power switch comprising:
logic circuitry able to execute logic instructions and operatively connected to:
two or more interface connections;
a memory storing logic instructions;
a plurality of relays each individually controlling one or more power outlets;
a plurality of current sensors each individually sensing current drawn by one or more outlets; and
an inlet for receiving power from an external source.

8. The device of claim 7 further wherein:
said at least two interface connections are selected from:
a network connection;
a telephone connection; or
a direct serial connection.

9. The device of claim 7 further wherein:
said logic circuitry provides at least two external interfaces selected from:
an web-based interface;
a telephone interface;
a telnet interface;
an email interface;
a serial interface; or
an SNMP interface.

10. The device of claim 7 further wherein:
said logic circuitry comprises:
a microcontroller.

11. The device of claim 10 further wherein:
said logic circuitry further comprises:
one or more drivers and/or processors for operating said interfaces and/or said outlets.

12. The device of claim 7 further wherein:
said plurality of relays comprise at least four relays each individually controlling one or more power outlets; and
said plurality of current sensors comprise at least four current sensors each individually sensing current drawn from one or more power outlets.

13. The device of claim 7 further wherein:
said plurality of relays comprise at least eight relays each individually controlling one or more power outlets; and
said plurality of current sensors comprise at least eight current sensors each individually sensing current drawn from one or more power outlets.

14. The device of claim 7 further wherein:
said device is configured to fit in one rack unit of a standard network rack of

15. The device of claim 7 further wherein:
said device has approximate dimensions 17" wide x 8.38" deep x 1.75" high.

16. A remotely controlled and/or monitored power source comprising:
a plurality of power outlet means;
means for monitoring and/or configuring a power outlet using a direct computer connection;
means for monitoring and/or configuring a power outlet using a network connection;
means for receiving instructions from one or more users;
means for presenting data to one or more users;
means for individually and accurately sensing current drawn at each said power outlet means.
